# EUROPEAN PATENT SPECIFICATION

(11) **EP 4 035 518 B1**
(45) Date of publication and mention of the grant of the patent: **08.04.2026**
(21) Application number: 21153628.9
(22) Date of filing: 27.01.2021
(51) Int. Cl.: A01C 7/06, A01C 7/08

(54) **A METHOD OF DISTRIBUTING GRANULAR MATERIALS AND A DISTRIBUTOR HEAD OF A DISTRIBUTION AGRICULTURAL DEVICE**
VERFAHREN ZUM VERTEILEN VON KÖRNIGEN MATERIALIEN UND VERTEILERKOPF EINER LANDWIRTSCHAFTLICHEN VERTEILUNGSVORRICHTUNG
PROCÉDÉ DE DISTRIBUTION DE MATÉRIAUX GRANULAIRES ET TÊTE DE DISTRIBUTION D'UN DISPOSITIF AGRICOLE DE DISTRIBUTION

(43) Date of publication of application: 03.08.2022
(73) Proprietor: Bednar FMT s.r.o., 190 17 Praha 9 (CZ)
(72) Inventor: Syrovatka, Pavel, 41301 Klenec - Roudnice nad Labem (CZ); Bednar, Vojtech,, 19017 Praha-Vinor (CZ)
(74) Representative: Dadej, Leopold

(56) References cited:
- WO-A1-2018/046639
- CA-A1- 3 047 567
- DE-A1- 10 121 910
- DE-A1- 102017 216 623

## Description

### Technical field

Disclosed invention relates to a distributor head of a distribution agricultural device for distributing a granular material, such as seeds or fertilizer, to a processed soil.

### Background of the invention

In modern agriculture, there is a huge need for saving space and water while simultaneously increasing a yield and quality of crops. With these requirements, novel methods of crop cultivation are presented, such as precision sowing or interrow cultivation. Precision sowing is used to save the seeds either by sowing them in precisely defined positions with defined intervals, or by sowing a strictly defined number of seeds. The other exemplary method uses sowing auxiliary plants which are not used for further harvest but rather to enhance the quality of the soil by increasing the ratio of nitrogen or other fertilizing compounds in the soil. Usually, these plants are sowed in rows between the crops to be harvested. Depending on the applied process, the fertilizing plants can be sowed in every other row, every third row etc. In other applications of precision sowing, it is important to deliver the granular fertilizer close to the sowed seeds of the crops to be harvested.

The seeds of the harvest crops and the seeds of the fertilizing plants or the granular fertilizer are usually stored in separate hoppers or in a dual hopper with separate chambers. From the hopper, the granular material (seeds or fertilizer) is further transported to a distributor head feed pipe, wherein the movement is achieved by a powerful airflow. In the distributor head, the granular material is divided into individual outlets which lead via tubes to the final outlets which are arranged evenly along the agricultural device in the proximity of the ground. In case only one distributor head is used, it is difficult to manage the precise distribution of the two granular materials. For this reason, many agricultural devices have two distributor heads, one for each granular material. Distributor heads usually have operable covers of outlets, which allow selective covering of an outlet either by covering them individually, or covering every other outlet etc. This enables selection of the place where the granular material is disposed, combining of granular materials in the place of disposal etc. However, having two distributor heads on an agricultural device, as presented e.g., in patent US 8,903,545 B2, brings some technical issues, such as a high weight of the agricultural device, too many tubes which make the regular service of the agricultural device difficult, as well as huge volume of the agricultural device, where two distributor heads make it even more difficult to fold the agricultural device into transportation shape. Another seeder with a distribution device formed by two distributor heads arranged together is known from CA 3 047 567 A1.

### Summary of the invention

The aforementioned drawbacks of the prior art are at least partially solved by a method of distributing granular materials according to claim 1 and a distributor head according to claim 7. The agricultural distribution device of these claims is provided with a distributor head divided into two chambers and a hopper. These chambers are provided with a plurality of evenly arranged outlets placed along their circumference. At least two types of granular materials are supplied pneumatically and separately using a stream of air flowing from the hopper through the feed pipes to the distributor head. The airflow carrying the first granular material is substantially opposite to the airflow carrying the second granular material when entering the distributor head, wherein the first granular material is supplied to the first chamber and the second granular material is supplied to the second chamber of the distributor head. The chambers are separated by a wall. This method allows distribution of two granular materials without the need of two distributor heads and thus reduces weight of the agricultural device and maintenance requirements.

The distributor head is preferably operable in at least three distribution modes. In the first distribution mode, the airflow carrying the first granular material and the airflow carrying the second granular material are not restricted and thus all the granular materials are distributed equally. In the second distribution mode, the airflow carrying the first granular material is not restricted while the airflow carrying the second granular material is restricted. This distribution mode allows distribution of only one granular material. The third distribution mode is an opposite of the second distribution mode and restricts the airflow carrying the first granular material while the second granular material flows freely.

The distributor head is further operable in at least one other distribution mode in which a portion of outlets of a given chamber is covered while the other outlets of the given head are opened, uncovered, and allowing the airflow and distribution of the granular material supplied to the given chamber. This distribution mode allows distribution of given granular material only on a selected section of the distribution agricultural device. Further, in a modification of this mode, every other outlet is covered while the rest allow a free flow of the given granular material. This allows the granular material to be distributed in every other line in the processed soil or only on a selected half of the agricultural device, depending on placement of the distributing pipes. In further modification of this mode, every outlet belonging to a radial section of the circumference of the given chamber is opened while the others are closed. This allows the granular material of the given chamber to be distributed on a fraction of the width of the distribution agricultural device.

The chambers may be operable in different distribution modes. For example, the bottom chamber has all the outlets opened, while the top chamber has every other outlet opened. This allows selective distribution of the granular materials. In another example, every other outlet of the bottom chamber is opened, while the corresponding outlet of the top chamber is closed. This allows distribution of the first granular material in every other line in the processed soil, while in the remaining lines, the second granular material is distributed.

The aforementioned drawbacks of the prior art are further at least partially solved by a distributor head of a distribution agricultural device comprising a cylindrical body provided with a plurality of evenly arranged outlets along its circumference. The outlets are connected to distributing tubes arranged along the width of the distribution agricultural device. The cylindrical body of the distributor head is divided into two chambers provided with inlets, which are connected to at least one hopper by feed pipes. A bottom inlet is connected to the bottom chamber and a top inlet is connected to the top chamber. The chambers are separated, so that granular material entering the top chamber has no way of entering the bottom chamber and vice versa. The bottom chamber, as well as the top chamber, are provided with a plurality of evenly arranged outlets along their circumferences. This distribution head allows regulated distribution of two granular materials without necessary mixing of them.

Preferably, the outlets are provided with covers ensuring that the distributor head may distribute the granular materials in different modes.

Preferably, the number of outlets of the top chamber is identical with the number of outlets of the bottom chamber, wherein these outlets may be connected so that the number of distributing tubes is halved.

In another preferred embodiment, the number of outlets of one of the chambers is double the number of outlets of the other chamber. This embodiment basically allows a defined ratio of granular materials to be distributed automatically.

Preferably, the outlets are controlled individually, allowing a plurality of distribution modes on the distributor head.

In another preferred embodiment, the distributor head further comprises a vertical guiding groove and a hoop placed movably in the guiding groove. The hoop is provided with a plurality of evenly arranged openings along its circumference in at least two levels. The hoop is placeable in at least four positions, wherein in the first position the outlets of the top chamber are covered, and the outlets of the bottom chamber are uncovered, in a second position the outlets of the bottom chamber are covered, and the outlets of the top chamber are uncovered, in a third position the outlets are uncovered and in a fourth position the outlets are covered. This embodiment allows the distributor head to be operable in a plurality of distribution modes ensuring a distribution of either type of granular materials, or their combination.

### Brief description of the drawings

The object of the present invention is further illustrated by means of examples of its implementation, which are described with the use of the accompanying drawings, in which:
Fig. 1 - depicts a distribution head divided into two chambers, wherein each chamber is provided with a plurality of outlets arranged along its circumference;
Fig. 2 - depicts a distribution head divided into two chambers, where the number of outlets of the bottom chamber is double the number of outlets of the top chamber.
The top chamber is connected to the first hopper via the feed tube and the bottom chamber is connected to the second hopper via the feed tube;
Fig. 3 - depicts outlet covers of the outlets of the chambers, wherein the outlet covers are controlled individually;
Fig. 4 - depicts a distribution head where the outlets of chambers are covered by a hoop with a plurality of openings arranged along its circumference and in different levels.

### Exemplary embodiments of the technical solution

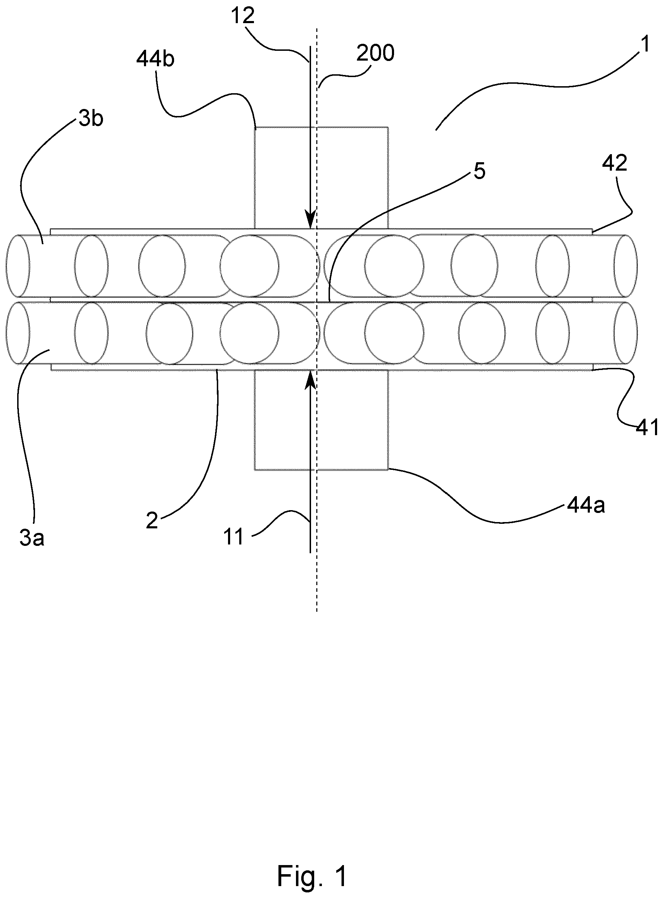

In the exemplary embodiment depicted on the Fig. 1, a distributor head 1 of a distribution agricultural device comprises a cylindrical body 2 provided with a plurality of evenly arranged outlets 3a, 3b along its circumference. The cylindrical body 2 is divided into two chambers 41, 42 separated by a wall 5. The chambers 41, 42 are separated in such a way that granular material supplied to the bottom chamber 41 cannot get into the top chamber 42 and vice versa. Each chamber 41, 42 is provided with an inlet 44a, 44b. A bottom inlet 44a is connected to the bottom chamber 41 and a top inlet 44b is connected to the top chamber 42. The inlets 44a, 44b are in a similar position on the chambers 41, 42 and placed on a central axis 200 of the distributor head 1 meaning that the distributor head 1 is substantially symmetric. The chambers 41, 42 are provided with a number of evenly arranged chamber outlets 3a, 3b on their circumference. The outlets 3a, 3b are connected to distributing tubes 8 which are deployed along the agricultural device in a proximity of the processed soil to distribute the granular material.

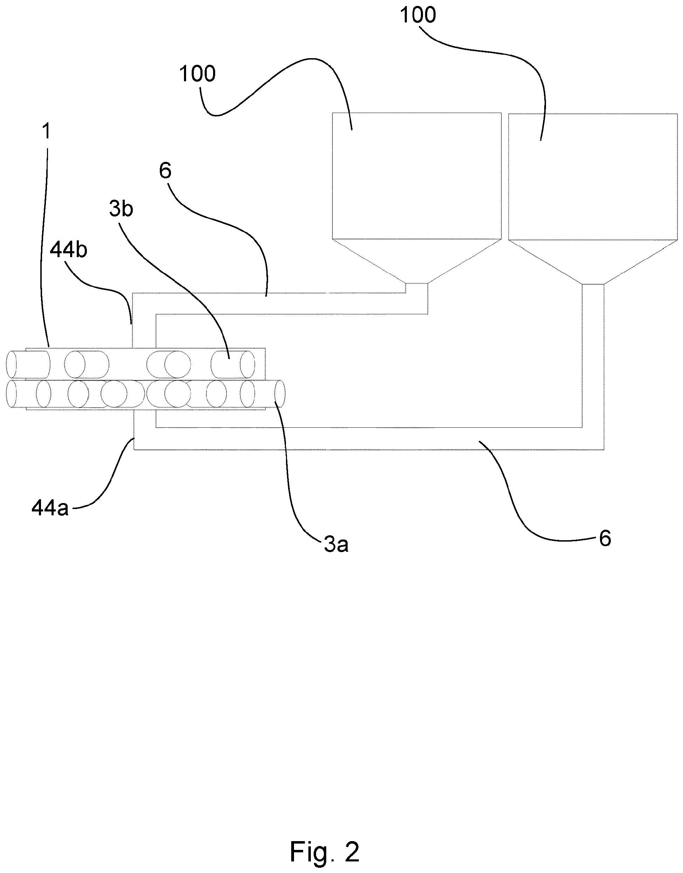

The distribution agricultural device shown on the Fig. 2 further comprises at least one hopper 100 for storing at least two types of granular material, e.g., various seeds and/or fertilizer. In the exemplary embodiment, the hopper 100 is either dual or separated into two chambers and thus provides two types of granular material, or the agricultural device comprises two hoppers 100, one for each type of the granular material, or the hopper 100 comprises other means ensuring the two types of granular material stay separated. The hopper 100 is connected to the inlets 44a, 44b of the distributor head 1 by two feed pipes 6, one is connected to the bottom inlet 44a, the second to the top inlet 44b. The transport of the granular material from the hopper(s) 100 to the distribution head 1 is ensured pneumatically by a powerful stream of air flowing through the feed pipes 6 and carrying the granular material. Thus, the airflow 11 carrying the first granular material via the feed pipe 6 to the bottom inlet 44a and subsequently into the bottom chamber 11 is substantially opposite to the airflow 12 carrying the second granular material via the feed pipe 6 to the top inlet 44b and subsequently into the top chamber 42, as can be seen on the Fig. 1. In other words, the first granular material distributed from the hopper 100 by the feed pipe 6 and the bottom inlet 44a to the bottom chamber 41 moves upwards when entering the distributor head 1 and the second granular material distributed from the hopper 100 by the feed pipe 6 and the top inlet 44b to the top chamber 42 moves downwards when entering the distributor head 1.

The distributor head 1 further comprises outlet covers 7 which are used to manage the output of granular material throughout the agricultural device by being placed in at least two positions where in the first position, the outlet 3a, 3b is covered with the outlet cover 7 and the airflow is limited so that no granular material is passed through this particular outlet 3a, 3b, and in the second position, the outlet 3a, 3b is uncovered so that the airflow is free and the granular material can pass through the outlet to the distributing pipes 8 along the agricultural device. The outlet covers 7 are placed in the proximity of the outlets 3a, 3b.

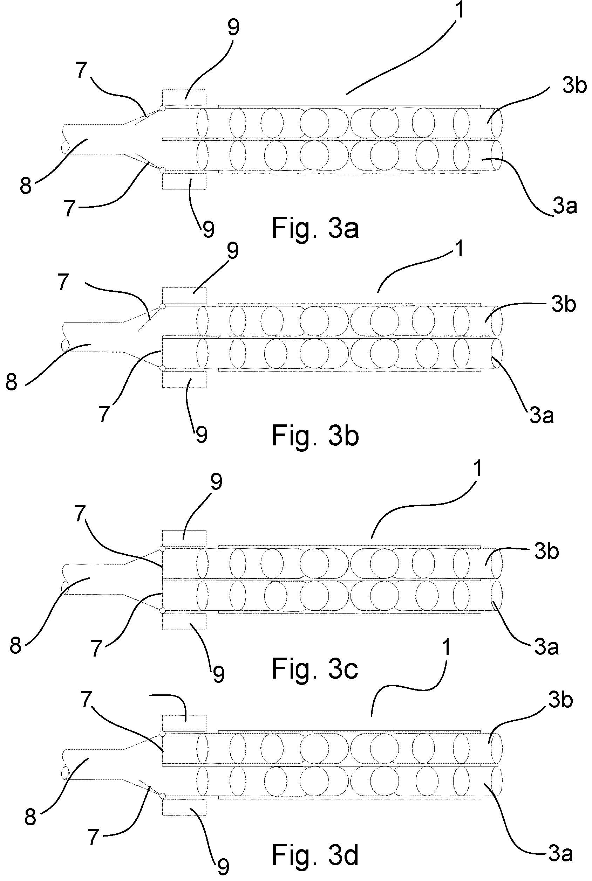

In an exemplary embodiment shown on the Fig. 3, each outlet 3a, 3b may comprise its own outlet cover 7 ensuring that all outlets 3a, 3b may be operated individually. The control of the outlet covers 7 in this exemplary embodiment is realized electrically by an outlet control 9 placed on a panel either on the distribution agricultural device or in the towing vehicle to which the distribution agricultural device is connected. The control panel is electrically coupled with the outlet covers 7 and contains a plurality of control elements which are used to control the position of the outlet covers 7, e.g., by pressing the control element the outlet cover 7 is closed or opened.

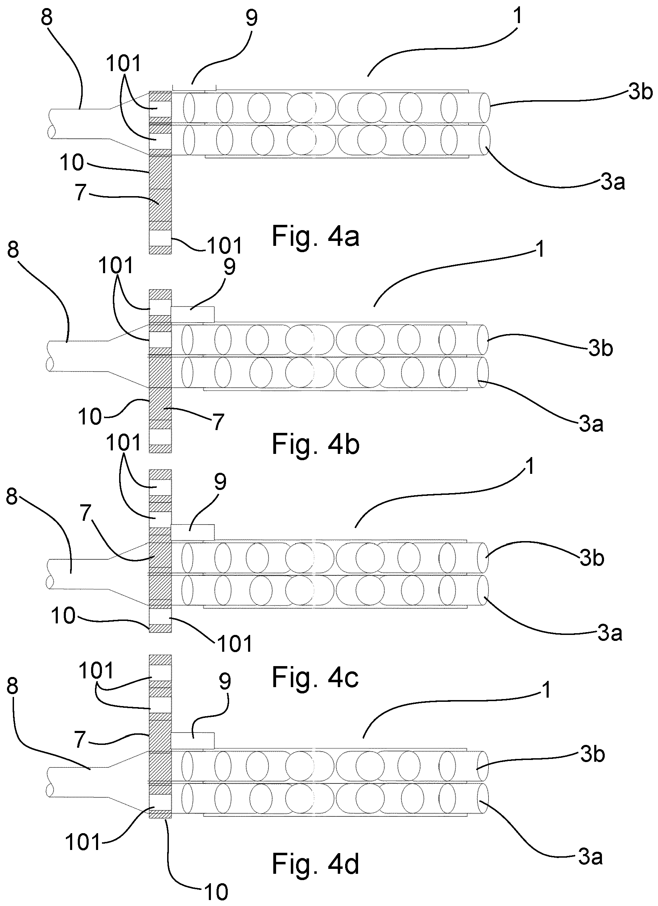

In another exemplary embodiment depicted on the Fig. 4, the distributor head 1 further comprises a guiding groove placed in a substantially vertical orientation, and a hoop 10 placed movably in the guiding groove. The hoop 10 is provided with a plurality of evenly arranged hoop openings 101 along its circumference. The hoop openings 101 are arranged in at least two levels, however, the arrangement of the hoop openings 101 in various levels may not be identical if the arrangement of the outlets 3a, 3b is not identical as well. In the exemplary embodiment, the hoop openings 101 in at least one level overlay with the outlets 3a of the bottom chamber 41 and the hoop openings 101 in at least one other level overlay with the outlets 3b of the top chamber 42. The hoop 10 may be placed in various positions be sliding it through the guiding groove. In each position, a selection of outlets 3a, 3b is either covered or opened. Preferably, there are at least four positions for the hoop 10 to be placed in. In the first position, the hoop openings 101 in one level are placed in such a way that their position corresponds to that of the outlets 3a of the bottom chamber 41 which are uncovered. The outlets 3b of the top chamber 42 are covered by the hoop 10 as there are no further hoop openings 101 available in the first position of the hoop 10. In the second position, the hoop openings 101 in two levels are placed in such a way that the position of the hoop openings 101 in one level corresponds to that of the outlets 3a of the bottom chamber 41 which are uncovered and the position of the hoop openings 101 in other level corresponds to that of the outlets 3b of the top chamber 42 which are uncovered. In the third position, the hoop openings 101 in one level are placed in such a way that their position corresponds to that of the outlets 3b of the top chamber 42 which are uncovered. The outlets 3a of the bottom chamber 41 are covered by the hoop 10 as there are no further hoop openings 101 available in the first position of the hoop 10. In the fourth position, all the outlets 3a, 3b are covered by the hoop 10. There may be at least one other level of hoop openings 101 arranged on the hoop 10 in such a way that in the fifth position of the hoop 10, every other opening 3a, 3b on at least one of the chambers 41, 42 is covered while the rest of the openings 3a, 3b of that particular chamber 41, 42 are opened. The hoop 10 may be further placed rotatably in the guiding groove so that a rotation of the hoop 10 in the distributor head 1 is enabled. Thus, in the fifth position, the hoop 10 may be rotated about the central axis 200 so that the openings 3a, 3b of the particular chamber 41, 42 which were covered are now opened and vice versa. The movement of the hoop 10 is realized either manually with a lever attached to the hoop 10 wherein by moving the lever, the hoop 10 is moved along the guiding groove, or electronically by selecting the desired position of the hoop 10 in the guiding groove on the outlet control 9 placed on the control panel which is electronically coupled with a moving mechanism (e.g., engine and a lever) for moving the hoop 10.

Covering of the outlets 3a, 3b by the outlet covers 7 or the hoop 10 allows user to select a plurality of distribution modes. In the first distribution mode depicted on the Fig. 3a and Fig. 4a, all of the outlets 3a, 3b are uncovered and the airflows 11, 12 are not restricted. The first distribution mode thus allows a distribution of two granular materials along the width of the agricultural device. In the second distribution mode depicted on the Fig. 3d and Fig. 4d, the outlets 3a of the bottom chamber 11 are uncovered while the outlets 3b of the top chamber 42 are covered and the airflow 11 of the first granular material is not restricted. The second distribution mode thus allows a distribution of the first type of the granular material along the width of the agricultural device while the second type of the granular material is not distributed. In the third distribution mode depicted on the Fig. 3b and Fig. 4b, the outlets 3a of the bottom chamber 11 are covered while the outlets 3b of the top chamber 42 are uncovered and the airflow 12 of the second granular material is not restricted. The second distribution mode thus allows a distribution of the second type of the granular material along the width of the agricultural device while the first type of the granular material is not distributed. In the fourth distribution mode depicted on the Fig. 3c and Fig. 4c, all the outlets 3a, 3b are covered and no distribution of either type of granular material is possible.

Further types of distribution modes are applicable to one of the chambers 41, 42, wherein each chamber 41, 42 may be in different distribution mode, in other words, the distribution modes may be combined. The distribution modes may be similar to those described above, as all the outlets 3a, 3b of the given chamber 41, 42 may be either covered or opened while the other chamber 41, 42 is in one of the following distribution modes. In another distribution mode, a fraction of the outlets 3a, 3b is opened while the rest remain covered. For example, every other outlet 3a, 3b is opened. In yet another distribution mode, every third, fourth, fifth, etc., outlet 3a, 3b is opened or closed. In yet another distribution mode, the outlets 3a, 3b of a radial section of the given chamber 41, 42, such as 180°, 90°, 40°, etc., are opened while the others remain closed. This distribution mode thus allows a fraction, such as half, third, quarter, fifth, etc., of the outlets 3a, 3b to be opened or closed. Modes described in this paragraph thus allow a modified distribution of the granular material. For example, the granular material is distributed from the left or right half of the agricultural device, or other reasonable fraction. Another mode allows the granular material to be distributed in every other, third, fourth, etc., row in the processed soil, while in the other rows the other granular material is distributed. This allows the agricultural device to selectively distribute the seeds, so that different crops are planted in different rows, or selectively disable the distribution of the granular material, for example when the agricultural device is only partially on the processed soil.

In an exemplary embodiment, the number of outlets 3a of the bottom chamber 41 is the same as the number of outlets 3b of the top chamber 42. The radial position of the outlets 3a, 3b is then the same for both chambers 41, 42. In another exemplary embodiment, as depicted on the Fig. 2, the number of outlets 3a of the bottom chamber 41 is different from the number of outlets 3b of the top chamber 42. For example, the number of outlets 3a of the bottom chamber 41 is double the number of outlets 3b of the top chamber 42. In yet another exemplary embodiment, the number of outlets 3a of the bottom chamber 41 is half the number of outlets 3b of the top chamber 42.

In an exemplary embodiment, the chamber outlets 3a, 3b are connected together and lead to the outlets 3a, 3b arranged at the circumference of the distributor head 1. The connection of the outlets 3a, 3b is realized behind the outlet covers 7 in direction of the airflow. The outlets 3a, 3b are connected to a corresponding number of distributing tubes 8 which are deployed along the agricultural device in a proximity of the processed soil to distribute the granular material. In an exemplary embodiment, where the number of outlets 3a, 3b of one chamber 41, 42 is double of the number of outlets 3a, 3b of the other chamber 41, 42, one outlet 3a, 3b of the chamber 41, 42 with fewer outlets 3a, 3b is connected to the closest outlet 3a, 3b of the chamber 41, 42 with more outlets 3a, 3b.

### List of reference numerals

1 - distributor head
2 - cylindrical body
3a - bottom chamber outlet
3b - top chamber outlet
41 - bottom chamber
42 - top chamber
44a - bottom inlet
44b - top inlet
5 - wall
6 - feed pipe
7 - outlet cover
8 - distributing tubes
9 - outlet control
10 - hoop
101 - hoop opening
100 - hopper
200 - central axis
11 - airflow carrying the first granular material
12 - airflow carrying the second granular material

## Claims

1. A method of distributing granular materials using an agricultural distribution device provided with a distributor head (1) comprising a cylindrical body (2) divided into a top and a bottom chamber (41, 42) each provided with a plurality of evenly arranged outlets (3a, 3b) along their circumference, and a hopper (100), where the granular materials are supplied pneumatically and separately to the distributor head (1) from the hopper (100) via feed pipes (6) wherein an airflow (11) carrying a first granular material is substantially opposite to an airflow (12) carrying a second granular material when entering the distributor head (1), wherein the first granular material is supplied to the first chamber (41) and the second granular material is supplied to the second chamber (42), wherein the chambers (41, 42) are separated by a wall (5).

2. The method of distributing granular materials according to claim 1 further **characterized in that** the distributor head (1) is operable in at least three distribution modes, wherein in a first distribution mode, the airflow (11) carrying the first granular material and the airflow (12) carrying the second granular material are not restricted, in a second distribution mode, the airflow (11) carrying the first granular material is not restricted and the airflow (12) carrying the second granular material is restricted, and in a third distribution mode, the airflow (11) carrying the first granular material is restricted and the airflow (12) carrying the second granular material is not restricted.

3. The method of distributing granular materials according to claim 2 further **characterized in that** the distributor head (1) is further operable in at least one other distribution mode, wherein in the other distribution mode a portion of outlets (3a, 3b) of a given chamber (41, 42) is covered and restricts the airflow while the remaining outlets (3a, 3b) of the given chamber (41, 42) allow the airflow.

4. The method of distributing granular materials according to claim 3 further **characterized in that** every other outlet (3a, 3b) of the given chamber (41, 42) is covered.

5. The method of distributing granular materials according to any of the claims 2 to 4 further **characterized in that** every outlet (3a, 3b) of the given chamber (41, 42) belonging to a radial section of the circumference of the chamber (41, 42) is opened.

6. The method of distributing granular materials according to any of the claims 2 to 5 further **characterized in that** the chambers (41, 42) are in different distribution modes.

7. A distributor head (1) of a distribution agricultural device comprising a cylindrical body (2), provided with a plurality of evenly arranged outlets (3a, 3b) along its circumference, wherein the outlets (3a, 3b) are connected to distributing tubes (8) arranged along the width of the distribution agricultural device, wherein the cylindrical body (2) is divided into a top and a bottom chamber (41, 42) each provided with inlets (44a, 44b) connected to at least one hopper (100) by feed pipes (6) wherein a bottom inlet (44a) is connected to the bottom chamber (41), a top inlet (44b) is connected to the top chamber (42), the chambers (41, 42) are separated, the bottom chamber (41) is provided with a plurality of evenly arranged outlets (3a) along its circumference and the top chamber (42) is provided with a plurality of evenly arranged outlets (3b) along its circumference, wherein the chambers (41, 42) are separated by a wall (5).

8. The distributor head (1) according to the claim 7 further **characterized in that** the outlets (3a, 3b) are provided with covers (7).

9. The distributor head (1) according to any of the preceding claims 7 to 8 further **characterized in that** the number of outlets (3a) of the bottom chamber (41) is identical with the number of outlets (3b) of the top chamber (42).

10. The distributor head (1) according to claim 9 further **characterized in that** the outlets (3a) of the bottom chamber (41) are connected with the outlets (3b) of the top chamber (42).

11. The distributor head (1) according to any of the preceding claims 7 to 8 further **characterized in that** the number of outlets (3a, 3b) of one of the chambers (41, 42) is double the number of the outlets (3a, 3b) of the other chamber.

12. The distributor head (1) according to any of the preceding claims 7 to 11 further **characterized in that** the outlets (7) are controlled individually.

13. The distributor head (1) according to any of the preceding claims 7 to 11 further **characterized in that** it further comprises a vertical guiding groove and a hoop (10) placed movably in the guiding groove, wherein the hoop (10) is provided with a plurality of evenly arranged openings (101) along its circumference in at least two levels, wherein the hoop (10) is placeable into at least four positions, wherein in a first position the outlets (3b) of the top chamber (42) are covered and the outlets (3a) of the bottom chamber (41) are uncovered, in a second position the outlets (3a) of the bottom chamber (41) are covered and the outlets (3b) of the top chamber (42) are uncovered, in a third position the outlets (3a, 3b) are uncovered and in a fourth position the outlets (3a, 3b) are covered.

## Patentansprüche

1. Ein Verfahren zum Verteilen von körnigen Materialien unter Verwendung einer landwirtschaftlichen Verteilungsvorrichtung, die mit einem Verteilerkopf (1) versehen ist, der einen zylindrischen Körper (2) umfasst, der in eine obere und eine untere Kammer (41, 42) unterteilt ist, die jeweils mit einer Vielzahl von gleichmäßig angeordneten Auslässen (3a, 3b) entlang ihres Umfangs und mit einem Trichter (100) versehen sind, wobei die körnigen Materialien pneumatisch und getrennt vom Trichter (100) über Zuführleitungen (6) zum Verteilerkopf (1) zugeführt werden, wobei ein Luftstrom (11), der ein erstes körniges Material transportiert, im Wesentlichen entgegengesetzt zu einem Luftstrom (12) ist, der ein zweites körniges Material transportiert, wenn er in den Verteilerkopf (1) eintritt, wobei das erste Körnige Material in die erste Kammer (41) zugeführt wird und das zweite Körnige Material in die zweite Kammer (42) zugeführt wird, wobei die Kammern (41, 42) durch eine Wand (5) voneinander getrennt sind.

2. Das Verfahren zum Verteilen von körnigen Materialien nach Anspruch 1, ferner **dadurch gekennzeichnet, dass** der Verteilerkopf (1) in mindestens drei Verteilungsmodi betreibbar ist, wobei in einem ersten Verteilungsmodus der Luftstrom (11), der das erste körnige Material transportiert, und der Luftstrom (12), der das zweite körnige Material transportiert, nicht eingeschränkt sind, in einem zweiten Verteilungsmodus der Luftstrom (11), der das erste körnige Material transportiert, nicht eingeschränkt ist und der Luftstrom (12), der das zweite körnige Material transportiert, eingeschränkt ist, und in einem dritten Verteilungsmodus der Luftstrom (11), der das erste körnige Material transportiert, eingeschränkt ist und der Luftstrom (12), der das zweite körnige Material transportiert, nicht eingeschränkt ist.

3. Das Verfahren zum Verteilen von körnigen Materialien nach Anspruch 2, ferner **dadurch gekennzeichnet, dass** der Verteilerkopf (1) ferner in mindestens einem weiteren Verteilungsmodus betreibbar ist, wobei in dem weiteren Verteilungsmodus ein Teil der Auslässe (3a, 3b) einer bestimmten Kammer (41, 42) abgedeckt ist und den Luftstrom einschränkt, während die übrigen Auslässe (3a, 3b) der bestimmten Kammer (41, 42) den Luftstrom zulassen.

4. Das Verfahren zum Verteilen von körnigen Materialien nach Anspruch 3, ferner **dadurch gekennzeichnet, dass** jeder zweite Auslass (3a, 3b) der bestimmten Kammer (41, 42) abgedeckt ist.

5. Das Verfahren zum Verteilen von körnigen Materialien nach einem der Ansprüche 2 bis 4, ferner **dadurch gekennzeichnet, dass** jeder Auslass (3a, 3b) der bestimmten Kammer (41, 42), der zu einem radialen Abschnitt des Umfangs der Kammer (41, 42) gehört, geöffnet ist.

6. Das Verfahren zum Verteilen von körnigen Materialien nach einem der Ansprüche 2 bis 5, ferner **dadurch gekennzeichnet, dass** sich die Kammern (41, 42) in unterschiedlichen Verteilungsmodi befinden.

7. Ein Verteilerkopf (1) einer landwirtschaftlichen Verteilungsvorrichtung, umfassend einen zylindrischen Körper (2), der mit einer Vielzahl von gleichmäßig entlang seines Umfangs angeordneten Auslässen (3a, 3b) versehen ist, wobei die Auslässe (3a, 3b) mit Verteilungsrohren (8) verbunden sind, die entlang der Breite der landwirtschaftlichen Verteilungsvorrichtung angeordnet sind, wobei der zylindrische Körper (2) in eine obere und eine untere Kammer (41, 42) unterteilt ist, die jeweils mit Einlässen (44a, 44b) versehen sind, die über Zuführleitungen (6) mit mindestens einem Trichter (100) verbunden sind, wobei ein unterer Einlass (44a) mit der unteren Kammer (41) verbunden ist, ein oberer Einlass (44b) mit der oberen Kammer (42) verbunden ist, die Kammern (41, 42) voneinander getrennt sind, die untere Kammer (41) mit einer Vielzahl von gleichmäßig entlang ihres Umfangs angeordneten Auslässen (3a) versehen ist und die obere Kammer (42) mit einer Vielzahl von gleichmäßig entlang ihres Umfangs angeordneten Auslässen (3b) versehen ist, wobei die Kammern (41, 42) durch eine Wand (5) voneinander getrennt sind.

8. Der Verteilerkopf (1) nach Anspruch 7, ferner **dadurch gekennzeichnet, dass** die Auslässe (3a, 3b) mit Abdeckungen (7) versehen sind.

9. Der Verteilerkopf (1) nach einem der vorstehenden Ansprüche 7 bis 8, ferner **dadurch gekennzeichnet, dass** die Anzahl der Auslässe (3a) der unteren Kammer (41) mit der Anzahl der Auslässe (3b) der oberen Kammer (42) identisch ist.

10. Der Verteilerkopf (1) nach Anspruch 9, ferner **dadurch gekennzeichnet, dass** die Auslässe (3a) der unteren Kammer (41) mit den Auslässen (3b) der oberen Kammer (42) verbunden sind.

11. Der Verteilerkopf (1) nach einem der vorstehenden Ansprüche 7 bis 8, **dadurch gekennzeichnet, dass** die Anzahl der Auslässe (3a, 3b) einer der Kammern (41, 42) doppelt so groß ist wie die Anzahl der Auslässe (3a, 3b) der anderen Kammer.

12. Der Verteilerkopf (1) nach einem der vorstehenden Ansprüche 7 bis 11, ferner **dadurch gekennzeichnet, dass** die Auslässe (7) einzeln gesteuert werden.

13. Der Verteilerkopf (1) nach einem der vorstehenden Ansprüche 7 bis 11, ferner **dadurch gekennzeichnet, dass** er ferner eine vertikale Führungsnut und einen beweglich in der Führungsnut platzierten Reifen (10) umfasst, wobei der Reifen (10) mit einer Vielzahl von gleichmäßig angeordneten Öffnungen (101) entlang seines Umfangs in mindestens zwei Ebenen versehen ist, wobei der Reifen (10) in mindestens vier Positionen platzierbar ist, wobei in einer ersten Position die Auslässe (3b) der oberen Kammer (42) abgedeckt und die Auslässe (3a) der unteren Kammer (41) unbedeckt sind, in einer zweiten Position die Auslässe (3a) der unteren Kammer (41) abgedeckt und die Auslässe (3b) der oberen Kammer (42) unbedeckt sind, in einer dritten Position die Auslässe (3a, 3b) unbedeckt sind und in einer vierten Position die Auslässe (3a, 3b) abgedeckt sind.

## Revendications

1. Un procédé de distribution de matériaux granulaires à l'aide d'un dispositif agricole de distribution muni d'une tête de distribution (1) comprenant un corps cylindrique (2) divisé en une chambre supérieure et une chambre inférieure (41, 42) munies chacune d'une pluralité de sorties (3a, 3b) disposées uniformément sur leur circonférence, et d'une trémie (100), où les matériaux granulaires sont acheminés pneumatiquement et séparément vers la tête de distribution (1) depuis la trémie (100) via des tuyaux d'alimentation (6), où un flux d'air (11) transportant un premier matériau granulaire est sensiblement opposé à un flux d'air (12) transportant un deuxième matériau granulaire lorsqu'il entre dans la tête de distribution (1), où le premier matériau granulaire est acheminé vers la première chambre (41) et le deuxième matériau granulaire est acheminé vers la deuxième chambre (42), où les chambres (41, 42) sont séparées par une paroi (5).

2. Le procédé de distribution de matériaux granulaires selon la revendication 1, **caractérisé en outre en ce que** la tête de distribution (1) peut fonctionner selon au moins trois modes de distribution, où, dans un premier mode de distribution, le flux d'air (11) transportant le premier matériau granulaire et le flux d'air (12) transportant le deuxième matériau granulaire ne sont pas restreints, dans un deuxième mode de distribution, le flux d'air (11) transportant le premier matériau granulaire n'est pas restreint et le flux d'air (12) transportant le deuxième matériau granulaire est restreint, et dans un troisième mode de distribution, le flux d'air (11) transportant le premier matériau granulaire est restreint et le flux d'air (12) transportant le deuxième matériau granulaire n'est pas restreint.

3. Le procédé de distribution de matériaux granulaires selon la revendication 2, **caractérisé en outre en ce que** la tête de distribution (1) peut en outre fonctionner dans au moins un autre mode de distribution, où, dans l'autre mode de distribution, une partie des sorties (3a, 3b) d'une chambre donnée (41, 42) est recouverte et restreint le flux d'air tandis que les sorties restantes (3a, 3b) de la chambre donnée (41, 42) permettent le flux d'air.

4. Le procédé de distribution de matériaux granulaires selon la revendication 3, **caractérisé en outre en ce qu'**une sortie sur deux (3a, 3b) de la chambre donnée (41, 42) est recouverte.

5. Le procédé de distribution de matériaux granulaires selon l'une quelconque des revendications 2 à 4, **caractérisé en outre en ce que** chaque sortie (3a, 3b) de la chambre donnée (41, 42) appartenant à une section radiale de la circonférence de la chambre (41, 42) est ouverte.

6. Le procédé de distribution de matériaux granulaires selon l'une quelconque des revendications 2 à 5, **caractérisé en outre en ce que** les chambres (41, 42) sont dans des modes de distribution différents.

7. Une tête de distribution (1) d'un dispositif agricole de distribution comprenant un corps cylindrique (2), muni d'une pluralité de sorties (3a, 3b) disposées de manière uniforme le long de sa circonférence, où les sorties (3a, 3b) sont reliées à des tubes de distribution (8) disposés sur la largeur du dispositif agricole de distribution, où le corps cylindrique (2) est divisé en une chambre supérieure et une chambre inférieure (41, 42) chacune munie d'entrées (44a, 44b) reliées à au moins une trémie (100) par des tuyaux d'alimentation (6), où une entrée inférieure (44a) est reliée à la chambre inférieure (41), une entrée supérieure (44b) est reliée à la chambre supérieure (42), où les chambres (41, 42) sont séparées, où la chambre inférieure (41) est munie d'une pluralité de sorties (3a) disposées de manière uniforme le long de sa circonférence et la chambre supérieure (42) est munie d'une pluralité de sorties (3b) disposées de manière uniforme le long de sa circonférence, où les chambres (41, 42) sont séparées par une paroi (5).

8. La tête de distribution (1) selon la revendication 7, **caractérisée en outre en ce que** les sorties (3a, 3b) sont munies de couvercles (7).

9. La tête de distribution (1) selon l'une quelconque des revendications 7 à 8 précédentes, **caractérisée en outre en ce que** le nombre de sorties (3a) de la chambre inférieure (41) est identique au nombre de sorties (3b) de la chambre supérieure (42).

10. La tête de distribution (1) selon la revendication 9, **caractérisée en outre en ce que** les sorties (3a) de la chambre inférieure (41) sont reliées aux sorties (3b) de la chambre supérieure (42).

11. La tête de distribution (1) selon l'une quelconque des revendications 7 à 8 précédentes, **caractérisée en ce que** le nombre de sorties (3a, 3b) de l'une des chambres (41, 42) est le double du nombre de sorties (3a, 3b) de l'autre chambre.

12. La tête de distribution (1) selon l'une quelconque des revendications 7 à 11 précédentes, **caractérisée en outre en ce que** les sorties (7) sont commandées individuellement.

13. La tête de distribution (1) selon l'une quelconque des revendications 7 à 11 précédentes, **caractérisée en outre en ce qu'**elle comprend en outre une rainure de guidage verticale et un cerceau (10) placé de manière mobile dans la rainure de guidage, où le cerceau (10) est muni d'une pluralité d'ouvertures (101) disposées uniformément sur sa circonférence à au moins deux niveaux, où le cerceau (10) peut être placé dans au moins quatre positions, où dans une première position, les sorties (3b) de la chambre supérieure (42) sont recouvertes et les sorties (3a) de la chambre inférieure (41) sont découvertes, dans une deuxième position, les sorties (3a) de la chambre inférieure (41) sont recouvertes et les sorties (3b) de la chambre supérieure (42) sont découvertes, dans une troisième position, les sorties (3a, 3b) sont découvertes et dans une quatrième position, les sorties (3a, 3b) sont recouvertes.
